# EUROPÄISCHE PATENTSCHRIFT

(11) **EP 3 967 719 B1**
(45) Veröffentlichungstag und Bekanntmachung des Hinweises auf die Patenterteilung: **01.10.2025**
(21) Anmeldenummer: 21189387.0
(22) Anmeldetag: 03.08.2021
(51) Int. Cl.: C08G 65/336

(54) **BESCHICHTUNGSZUSAMMENSETZUNGEN ZUR GRUNDIERUNG BITUMINÖSER UNTERGRÜNDE**
COATING COMPOSITIONS FOR PRIMING BITUMINOUS SUBSTRATES
COMPOSITIONS DE REVÊTEMENT DESTINÉ À L'APPLICATION DE COUCHE PRIMAIRE SUR LES SUBSTRATS BITUMINEUX

(30) Priorität: 09.09.2020 DE 102020123563
(43) Veröffentlichungstag der Anmeldung: 16.03.2022
(73) Patentinhaber: FRANKEN SYSTEMS GmbH, 97258 Gollhofen (DE)
(72) Erfinder: Luckert, Sven, 97320 Sulzfeld am Main (DE); Schmalstieg, Lutz, 97320 Sulzfeld am Main (DE)
(74) Vertreter: Gleim Petri Patent- und Rechtsanwaltspartnerschaft mbB

(56) Entgegenhaltungen:
- EP-A1- 3 205 681
- WO-A1-2014/026906
- DE-A1- 102014 207 506

## Beschreibung

Die Abdichtung von Dachflächen, Balkonen und Terrassen mithilfe bituminöser Beschichtungsmaterialien ist gängige Praxis. Hierbei werden auf den Untergrund, der aus Holz, Metall oder Beton besteht, zunächst eine oder mehrere Isolierschichten aufgebracht und anschließend wird eine ein- oder mehrlagige Abdichtungsschicht aufgebracht. Diese Abdichtungsschicht besteht sehr häufig aus bituminösen Abdichtungsfolien, die im Dach- und Anschlussbereich ausgelegt werden und an den Rändern, meistens im Übergang zu Beton, Mauerwerk oder Metall oder auch im Überlappungsbereich mit reaktiven Flüssigkunststoffen dicht und kraftschlüssig miteinander verbunden werden.

Reaktive Flüssigkunststoffe für die Bauwerksabdichtung, insbesondere zur Abdichtung von Flachdächern Balkonen und Terrassen sind in großer Anzahl im Markt. Diese basieren typischerweise auf ungesättigten Polyestern, Polyurethanen oder Acrylatcopolymeren. Geeignete polymere Abdichtungsmaterialien sind in der EOTA-Leitlinie ETAG Nr. 005 (Leitlinie für die europäische Technische Zulassung für flüssig aufzubringende Dachabdichtungen) genauer spezifiziert: Zum einen müssen die Massen dauerhaft, d. h. auch nach Alterung, hinreichend elastisch sein, um die durch Temperaturwechsel entstehenden Spannungen aufzufangen; zum anderen müssen die Beschichtungen mechanisch belastbar sein, um Undichtigkeiten infolge Durchstoßung, z. B. durch punktuelle Belastung mit hohem Druck oder durch herab fallende Gegenstände, zu vermeiden. Eine hinreichende Beständigkeit gegenüber mechanischer Beschädigung wird in der EOTA Leitlinie über einem weiten Temperaturbereich gefordert und muss durch Messung des Widerstandes gegenüber statischem und dynamischem Eindruck nachgewiesen werden. Andererseits wird in der Leitlinie aber auch eine dauerhafte Rissüberbrückung gefordert, die durch Messung der Reißdehnung nachgewiesen werden muss. Aufgrund dieses speziellen Anforderungsprofils und der geforderten Langzeitstabilität von mehr als 25 Jahren ist die Formulierung von derartigen Flüssigkunststoffen nicht einfach: die Formulierungen müssen aus ökologischen Gründen frei von flüchtigen organischen Lösemitteln sein und müssen signifikante Mengen an geeigneten Alterungsschutzmitteln enthalten, um der hohen Belastung durch UV-Strahlung zu widerstehen.

Als reaktive Flüssigkunststoffe können einkomponentige feuchtigkeitshärtende Abdichtungsmassen auf Basis von feuchtigkeitshärtenden Polyurethanen und silanterminierten Polymeren besonders vorteilhaft in der Bauwerksabdichtung eingesetzt werden. Entsprechende Produkte zeichnen sich durch eine einfache Verarbeitbarkeit und gute mechanische Eigenschaften aus. Aufgrund der toxikologischen Unbedenklichkeit und der ausgezeichneten Haftung zu nahezu allen Untergründen des Baubereiches werden insbesondere Abdichtungsmassen auf Basis von silanterminierten Polymeren besonders vorteilhaft als Detailabdichtung in Anschlussbereichen zu bituminösen Abdichtungsbahnen eingesetzt. Auf dieser Technologie basierende Materialien und ihre Verwendung als Abdichtungsmaterialien für Dachbeschichtungen sind z.B. aus EP-A 1 987 108, EP-A 2 352 776 und EP-A 2 561 024 sowie der WO 2019/ 114990 A1 bekannt.

Ferner sind die DE 10 2015 201 099 A1 sowie die US 2019 / 0 177 541 A1 bekannt.

In der langjährigen Praxis hat es sich aber gezeigt, dass Abdichtungsmassen auf Basis von peroxidisch härtenden Acrylaten, einkomponentigen Polyurethanen und silanterminierten Polymeren auf bituminösen Abdichtungsmaterialien, insbesondere auf beschieferten oder besandeten Dachbahnen, ein wesentlich schlechteres Alterungsverhalten unter Sauerstoff- und UV-Belastung zeigen im Vergleich zu freien Filmen der Abdichtungsmassen oder auch im Vergleich zu Abdichtungsmassen auf Metall, Kunststoff oder Beton. Die Materialalterung zeigt sich in einer Versprödung der Materialien sowie der Bildung von vielen kleinen Rissen an der Oberfläche der Abdichtung. Dieses Phänomen ist gleichermaßen zu beobachten bei Kurzbewitterungsversuchen unter Laborbedingungen als auch bei Freibewitterungen unter Realbedingungen.

Diese Ausführungen machen deutlich, dass es einen Bedarf an Produkten und/oder Verfahren gibt, die eine Verbesserung der Alterungsbeständigkeit von polymeren Abdichtungsmaterialien, insbesondere einkomponentigen feuchtigkeitshärtenden Abdichtungsmassen in direktem Kontakt mit bituminösen Abdichtungsmaterialien ermöglichen.

Aufgabe der vorliegenden Erfindung war daher die Bereitstellung von Produkten und/oder Verfahren zur Verbesserung der Alterungsbeständigkeit von einkomponentigen feuchtigkeitshärtenden Abdichtungsmassen in direktem Kontakt mit bituminösen Abdichtungsmaterialien.

Diese Aufgabe konnte mithilfe der nachstehend näher charakterisierten Grundierungen sowie mithilfe des nachstehend näher charakterisierten Verfahrens gelöst werden.

Die Erfindung beruht auf der überraschenden Beobachtung, dass spezielle nachstehend näher charakterisierte Grundierungen eine ausgezeichnete Haftbrücke zwischen bituminösen Abdichtungsmaterialien und polymeren Abdichtungsmassen darstellen und gleichzeitig hervorragende Barriereeigenschaften aufweisen zur Verhinderung der Migration schädlicher Komponenten aus dem Bitumen.

Gegenstand der Erfindung ist die Verwendung von Beschichtungszusammensetzungen zur Grundierung von Abdichtungsbahnen auf Bitumenbasis, mindestens enthaltend
A) eine polymere Verbindung der Formel

   Y-[O-C=O-NH-(CH₂)ₙ-Si-R¹ₐ-R²₍₃₋ₐ₎] x

   wobei Y für einen x-wertigen Polymerrest steht, wie er durch Entfernung der OH-Gruppen aus einem Polyetherpolyol entsteht und R¹ für eine Methylgruppe steht und R² für eine Methoxy- oder Ethoxygruppe steht, n=1 oder 3 ist und a=0 oder 1 ist
B) Silikonharze der allgemeinen Strukturformel

   R³_{c}(R⁴O)_{d}R⁵ₑSiO_{(4-c-d-e)/2}

   worin R³ und R⁴ für Alkylreste mit 1 bis 8 Kohlenstoffatomen stehen, R⁵ für einen Phenylrest steht und c, d stehen jeweils für 0 ,1, 2, oder 3, e steht für 0, 1 oder 2 wobei c+d+e kleiner oder gleich 3 ist und bevorzugt c+e = 0 oder 1 ist, besonders bevorzugt ist e=1.
C) einen flüssigen Katalysator zur Beschleunigung der Silanpolykondensation ausgewählt aus der Gruppe der organischer Zinnverbindungen, der organischen Titanverbindungen, der Amine, der Amidine und/oder der Guanidine
D) gegebenenfalls Verbindungen, die mindestens eine primäre, sekundäre oder tertiäre Aminogruppe und mindestens eine Alkoxysilylgruppe aufweisen
E) sowie gegebenenfalls Hilfs- und Zusatzstoffe

Gegenstand der vorliegenden Erfindung ist auch ein Verfahren zur Abdichtung von Anschlüssen auf Dächern mithilfe beschieferter oder besandeter Dachbahnen auf Bitumenbasis unter Verwendung der erfindungsgemäßen Grundierungen.

Die erfindungsgemäß einzusetzenden Beschichtungszusammensetzungen sind prinzipiell bekannt aus der DE 102015201099A1. Gemäß der Lehre dieser Veröffentlichung enthalten diese Beschichtungszusammensetzungen relativ hohe Anteile an anorganischen Füllstoffen und werden zur Beschichtung mineralischer Substrate eingesetzt. Die Anwendung im wesentlichen füllstofffreier Beschichtungsmassen als Grundierung für Dachbahnen auf Bitumenbasis ist neu, wobei die ausgezeichnete Sperrwirkung gegenüber schädlichen Bestandteilen aus dem Bitumen für den Fachmann keinesfalls zu erwarten war.

Im Rahmen der Erfindung einsetzbar als Komponente A sind Umsetzungsprodukte von Polyoxyalkylenpolyolen, vorzugsweise Polyoxypropylenpolyolen, besonders bevorzugt Polyoxypropylendiolen eines mittleren Molekulargewichts Mn von 2000 bis 30000 g/mol, vorzugsweise 4000 bis 20000 g/mol mit Isocyanatosilanen der allgemeinen Formel

O=C=N-(CH₂)ₙ-Si-R¹ₐ-R²₍₃₋ₐ₎

wobei R¹ für eine Methylgruppe und R² für eine Methoxy- oder eine Ethoxygruppe steht, n = 1 oder 3 ist und a= 0 oder 1 ist.

Bevorzugt ist a = 0 und R² steht für eine Methoxy- oder eine Ethoxygruppe, besonders bevorzugt ist a=1 und R¹ steht für eine Methylgruppe und R² für eine Methoxygruppe.

In den erfindungsgemäßen Beschichtungszusammensetzungen werden die polymeren Verbindungen der Komponente A in Mengen von 5 bis 40, Gew.% bevorzugt 10 bis 35 Gew.% bezogen auf das Gesamtgewicht der Beschichtungszusammensetzungen eingesetzt.

Im Rahmen der Erfindung einsetzbar als Komponente B sind flüssige Silikonharze entsprechend der Lehre der WO 2019 114990 A1. Als Komponente B einsetzbar sind Silikonharze der allgemeinen Strukturformel

R³_{c}(R⁴O)_{d}R⁵ₑSiO_{(4-c-d-e)/2}

Hierbei stehen R³ und R⁴ für Alkylreste mit 1 bis 8 Kohlenstoffatomen, bevorzugt für eine Methylgruppe und R⁵ steht für einen Phenylrest, c, d stehen jeweils für 0 1,1, 2, oder 3, e steht für 0, 1 oder 2 wobei c+d+e kleiner oder gleich 3 ist und bevorzugt c+e = 0 oder 1 ist, besonders bevorzugt ist e=1. Demnach handelt es sich bei den erfindungsgemäß als Komponente B einsetzbaren Silikonharzen vorzugsweise um Methyl- und/oder Phenylsilikonharze, bevorzugt Phenylsilikonharze, die Alkoxygruppen enthalten und demzufolge durch Silanpolykondenstaion vernetzbar sind. Ganz besonders bevorzugt handelt es sich bei der Komponente B um Phenylsilikonharze, die Methoxygruppen enthalten. Vorzugsweise besitzen die erfindungsgemäß gegebenenfalls einzusetzenden Siliconharze eine mittlere Molmasse (Zahlenmittel) Mn von ca. 600 g/mol bis ca. 3000 g/mol, und weisen lösemittelfrei eine Viskosität von maximal 20000 mPas bei 23°C auf, besonders bevorzugt eine Viskosität von maximal 5000 mPas bei 23°C In den erfindungsgemäßen Beschichtungszusammensetzungen werden die Silikonharze B in Mengen von mindestens 60 Gew.%, bevorzugt 65 bis 90 Gew.% bezogen auf das Gesamtgewicht der Beschichtungszusammensetzungen eingesetzt. Als Komponente C einsetzbar sind Katalysatoren, welche die Silanpolykondensation beschleunigen. Hierbei kann es sich grundsätzlich um beliebige, bisher bekannte Katalysatoren für durch Silanpolykondensation härtende Massen handeln, die auch im Gemisch eingesetzt werden können.

Beispiele für metallhaltige Härtungskatalysatoren C1 sind organische Zinnverbindungen wie beispielsweise Dibutylzinndilaurat, Dibutylzinnmaleat, Dibutylzinndiacetat, Dibutylzinndioctanoat, Dibutylzinnacetylacetonat, Dibutylzinnoxide, und entsprechende Dioctylzinnverbindungen.

Beispiele für metallhaltige Härtungskatalysatoren C2 sind organische Titanverbindungen, insbesondere Ester der Titansäure wie beispielsweise Tetrabutyltitanat, Tetrapropyltitanat, Tetraisopropyltitanat und Titantetraacetylacetonat.

Beispiele für aminische Härtungskatalysatoren C3 sind basische Aminverbindungen mit tertiären Aminogruppen, die sich durch eine vergleichsweise starke Basizität auszeichnen. Beispielhaft genannt seien Triethylamin, Tributylamin, N,N-Dimethylethanolamin, Aminoethylpiperazin,1,4- Diazabicyclo [2,2,2] octan, N-Bis- (N, N-dimethyl-2 - aminoethyl)- methylamin, N, N-Dimethylcyclohexylamin, N,N'-Dimethylpiperazin, Bis-2-dimethylaminoethyl-ether, N-Alkylmorpholine wie beispielsweise N-Ethylmorpholin oder Dimorpholinodiethylether oder Aminopropylmorpholin. Selbstverständlich können auch Gemische dieser aminischen Härtungskatalysatoren erfindungsgemäß eingesetzt werden. Ebenfalls einsetzbar als Härtungskatalysatoren D3 sind Metallkomplexe mit Aminen, insbesondere Zink-Amin-Komplexverbindungen.

Beispiele für Amidin-Katalysatoren C4 sind insbesondere cyclische Amidine wie 5 - Diazabicyclo [4.3.0] non-5-en,1 oder 8 -Diazabicyclo [5.4.0] undec-7-en sowie Metallkomplexe von Amidinen.

Als Guanidin-Katalysatoren C5 sind allgemein alle N-Alkyl oder N-Aryl-substituierte Katalysatoren mit Guanidinstruktur geeignet. Beispielhaft genannt seien an dieser Stelle Tetramethylguanidin, N,N'-Diphenylguanidin, N,N'-Di-o-Tolylguanidin oder 1-o-Tolylbiguanid.

Selbstverständlich können auch Gemische der genannten Katalysatoren D1 bis D5 verwendet werden.

In einer bevorzugten Ausführungsform der vorliegenden Erfindung werden keine Katalysatoren der Gruppen C1 und C2 verwendet, also nur Katalysatoren der Gruppen C3, C4 oder C5 gegebenenfalls in Form von Gemischen. Besonders bevorzugt werden ausschließlich Katalysatoren der Gruppe C4 und C5 eingesetzt.

In den erfindungsgemäßen Beschichtungszusammensetzungen werden die Katalysatoren C in Mengen von 0,01 bis 3 Gew.%, bevorzugt 0,1 bis 2 Gew.% bezogen auf das Gesamtgewicht der Beschichtungszusammensetzungen eingesetzt.

In einer bevorzugten Ausführungsform der vorliegenden Erfindung enthalten die erfindungsgemäßen Beschichtungszusammensetzungen zusätzlich als Komponente D Verbindungen, die mindestens eine primäre, sekundäre oder tertiäre Aminogruppe und mindestens eine Alkoxysilylgruppe aufweisen. Erfindungsgemäß einsetzbar sind an sich bekannte Aminosilan-Verbindungen der allgemeinen Strukturformel

NHY-(CH₂)_{b}-SiR¹ₐ-R²₍₃₋ₐ₎

worin R¹, R² und a die vorstehend genannte Bedeutung haben, b für 1 oder 3 steht und Y für ein Wasserstoffatom, für einen Alkylrest, einen Cycloalkylrest, einen Arylrest oder einen Aminoalkylrest steht; a ist vorzugsweise 0 und R² steht vorzugsweise für eine Methoxygruppe, b steht vorzugsweise für 3.

Beispiele für bevorzugt als Komponente A3 einsetzbare Aminosilanverbindungen sind 3-Aminopropyltrimethoxysilan, 3-Aminopropyltriethoxysilan, N-Aminoethyl-3-aminopropyltrimethoxysilan, N-Aminoethyl-3-aminopropyltriethoxysilan, N-Aminoethyl-3-aminopropyl-methyldimethoxysilan, N-Methyl-3-aminopropyltrimethoxysilan, N-Cyclohexyl-3-aminopropyltrimethoxysilan, N-Butyl-3-aminopropyltrimethoxysilan, N-Phenyl-3-aminopropyltrimethoxysilan, N-Cyclohexyl-3-aminopropyl-methyldimethoxysilan sowie Oligomerisierungsprodukte dieser Aminosilanverbindungen. Besonders bevorzugt einsetzbare Aminosilanverbindungen enthalten mindestens eine primäre Aminogruppe und Methoxysilylgruppen. Beispiele für besonders bevorzugt einsetzbare Aminosilanverbindungen sind 3-Aminopropyltrimethoxysilan, N-Aminoethyl-3-aminopropyltrimethoxysilan, N-Aminoethyl-3-aminopropyl-methyldimethoxysilan.

Die Aminosilan-Verbindungen der Komponente D wirken in der Beschichtungszusammensetzung gleichzeitig als Härtungskatalysator und als Haftvermittler. Die Aminosilan-Verbindungen der Komponente D werden typischerwqeise in einer Menge von 0,1 bis 5 Gew.% bezogen auf das Gesamtgewicht der Beschichtungszusammensetzungen eingesetzt, bevorzugt 0,2 bis 2 Gew.%.

Weiterhin enthalten die erfindungsgemäßen Beschichtungszusammensetzungen gegebenenfalls als Komponente E Hilfs- und Zusatzstoffe. Im Rahmen der Erfindung optional einsetzbar als Komponente E sind die dem Fachmann aus der Beschichtungstechnologie bekannten Hilfs- und Zusatzmittel. Dies sind zum einen Formulierungshilfsmittel wie Entlüfter, Entschäumer, Benetzungshilfsmittel, Netz- und Dispergieradditive sowie Rheologiehilfsmittel, zum anderen Haftvermittler, insbesondere solche aus der Gruppe der funktionellen Silane, wie beispielsweise Epoxysilane, Carbamatosilane, Isocyanuratosilane, Acryloxysilane oder Methaycryloxysilane.

Weiterhin optional einsetzbar im Rahmen der Komponente E sind Alterungsschutzmittel. Hierbei handelt es sich insbesondere um Antioxidationsmittel, UV-Absorber und Radikalfänger vom Typ der gehinderten Amin-Lichtstabilisatoren - HALS- sowie insbesondere auch Kombinationen aus derartigen Alterungsschutzmitteln.

Weiterhin optional einsetzbar im Rahmen der Komponente E sind untergeordnete Mengen an organischen Lösemitteln einsetzbar, d.h. bis zu maximal 5 Gew%, vorzugsweise bis zu maximal 3 Gew% bezogen auf das Gesamtgewicht der Beschichtungszusammensetzung. Als organische Lösemittel seien an dieser Stelle Ethylacetat, Butylacetat, Methoxypropylacetat, Methylethylketon, Methylisobutylketon, Toluol, Xylol, aromatische oder (cyclo-)aliphatische Kohlenwasserstoffgemische oder beliebigen Gemische derartiger Lösungsmittel genannt.

Optional einsetzbar im Rahmen der Komponente E sind die an sich bekannten Weichmacher ausgewählt aus der Gruppe der Phosphorsäureester, der Sulfonsäureester und/oder der aromatischen und/oder aliphatischen Carbonsäureester. Als Weichmacher im Rahmen der Komponente A6 mitverwendbar sind weiterhin Polyetherpolyole, insbesondere Polypropylenoxid-Polyether eines Molekulargewichtes von vorzugsweise 1000 bis 12000 g/mol. Weiterhin einsetzbar sind hochsiedende aliphatische und/oder aromatische Kohlenwasserstoffgemische. Die Mitverwendung derartiger Weichmacher im Rahmen der Komponente E ist weniger bevorzugt.

Im Rahmen der Komponente E können weiterhin reaktive Verdünner erfindungsgemäß mitverwendet werden, entsprechend der Lehre der WO 2019 114990 A1.

Beispiele für geeignete reaktive Verdünner sind insbesondere n-Alkyl-trialkoxysilylverbindungen, deren Alkylgruppe mindestens 8 Kohlenstoffatome aufweist, wie Isooctyltrimethoxysilan, Isooctyltriethoxysilan, n-Octyltrimethoxysilan, n-Octyltriethoxysilan, n-Decyltrimethoxysilan, n-Decyltriethoxysilan, n- Dodecyltrimethoxysiloan, n-Dodecyltriethoxysilan, n-Tetradecyltrimethoxysilan, n-Tetradecyltriethoxysilan, n-Hexadecyltrimethoxysilan, n-Hexadecyltriethoxysilan sowie n- Octadecyltriethoxysilan. Die Mitverwendung derartiger Silane vermindert die Wasseraufnahme der ausgehärteten Beschichtungen, was sich positiv auf die Langzeitstabilität auswirkt. Die Mitverwendung derartiger reaktiver Verdünner in Mengen von bis zu 25 Gew% bezogen auf das Gesamtgewicht der Beschichtungszusammensetzung ist bevorzugt. Als reaktive Verdünner weiterhin im Rahmen der Komponente E einsetzbar sind Tetraalkoxysilane der allgemeinen Strukturformel Si(OR²)₄ worin R² die oben genannte Bedeutung hat, sowie Kondensationsprodukte derartiger Tetraalkoxyverbindungen.

Die erfindungsgemäßen Beschichtungszusammensetzungen enthalten in der Regel keinerlei Pigmente und Füllstoffe. In speziellen Fällen kann es allerdings erwünscht sein, Pigmente und Füllstoffe in geringen Anteilen, d.h. In Mengen von weniger als 10 Gew%, bevorzugt weniger als 5 Gew% bezogen auf das Gesamtgewicht der Beschichtungszusammensetzung im Rahmen der Komponente E mitzuverwenden. Bei den ggf. mitzuverwendenden Pigmenten handelt es sich um die aus der Beschichtungstechnologie allgemein bekannten anorganische und organischen Farbpigmente. Bei den ggf. mitzuverwendenden Füllstoffen handelt es sich um anorganische Füllstoffe des Standes der Technik. Beispiele für Füllstoffe sind nicht verstärkende Füllstoffe, also Füllstoffe mit einer BET-Oberfläche von vorzugsweise bis zu 50 m²/g, wie Quarz, Diatomeenerde, Calciumsilikat, Zirkoniumsilikat, Talkum, Kaolin, Zeolithe, Metalloxidpulver, wie Aluminium-, Magnesium-, Titan-, Eisen- oder Zinkoxide bzw. deren Mischoxide, Bariumsulfat, Calciumcarbonat, Mischkristalle aus Kaolin und Quarz oder auch verstärkende Füllstoffe, also Füllstoffe mit einer BET-Oberfläche von mehr als 50 m²/g, wie pyrogen hergestellte Kieselsäure, gefällte Kieselsäure, gefällte Kreide, Ruß, wie Furnace- und Acetylenruß und Silicium-Aluminium-Mischoxide großer BET- Oberfläche oder Aluminiumtrihydroxid. Die genannten Füllstoffe können hydrophobiert sein, beispielsweise durch die Behandlung mit Organosilanen bzw. -siloxanen oder mit Fettsäuren oder durch Veretherung von Hydroxylgruppen zu Alkoxygruppen.

Gegenstand der vorliegenden Erfindung ist auch ein Verfahren zur Abdichtung von Anschlüssen auf Dächern mithilfe Dachbahnen auf Bitumenbasis unter Verwendung der erfindungsgemäßen Beschichtungszusammensetzungen.

Im erfindungsgemäßen Verfahren werden bituminöse Dachbahnen des Standes der Technik mit den vorstehend beschriebenen Beschichtungszusammensetzungen vor dem Aufbringen einer polymeren Abdichtungsschicht grundiert. Geeignet zur Vorbehandlung sind prinzipiell alle Bitumenbahnen des Standes der Technik. Hierbei kann es sich um Reinbitumenbahnen handeln oder um Elastomer- oder Plastomerbitumenbahnen, wobei Elastomerbitumenbahnen typischerweise mit Styrol-Butadien-Styrol -SBS- modifiziert sind und Plastomerbitumenbahnen mit ataktischem Polypropylen -APP-. Im erfindungsgemäßen Verfahren einsetzbare Dachbahnen enthalten typischerweise eine Trägereinlage aus Polyester-Vlies und/oder Glas-Vlies und/oder Polyester-Gewebe oder Glasgewebe. Im erfindungsgemäßen Verfahren können oberflächlich unbehandelte Bitumenbahnen eingesetzt werden oder oberflächlich beschieferte oder besandete Dachbahnen. Bevorzugt werden im erfindungsgemäßen Verfahren beschieferte oder besandete Bitumenbahnen eingesetzt.

Die im erfindungsgemäßen Verfahren einzusetzenden Beschichtungszusammensetzungen werden im erfindungsgemäßen Verfahren durch Streichen, Rollen oder Rakeln als einkomponentige Grundierung vollflächig auf die Bitumenbahnen aufgebracht. Sie zeigen ein ausgezeichnetes Benetzungsverhalten und ein gutes Penetrationsvermögen und härten bei den im Baubereich üblichen Umgebungstemperaturen, insbesondere ca. 23°C, innerhalb einer Zeit von 1 bis 4 Stunden aus. Die Applikation erfolgt zumeist so, dass ca. 100-1000g, bevorzugt 150-600g pro Quadratmeter Bitumenbahn appliziert werden.

Dabei ist es besonders vorteilhaft, dass die im erfindungsgemäßen Verfahren einzusetzenden Beschichtungszusammensetzungen eine ausgezeichnete Haftung auf allen im Baubereich üblichen Substraten aufweisen, insbesondere auf mineralischen Untergründen und auf Dachbahnen auf Polymer- oder Bitumenbasis einerseits und auf sich selbst andererseits. Mithin ist es möglich, mehrere Schichten der erfindungsgemäß zu verwendenden Beschichtungszusammensetzungen übereinander aufzubringen, wobei zwischen den verschiedenen Aufbringungsvorgängen die jeweils zuvor aufgebrachte Beschichtung bereits ausgehärtet sein kann. Diese Eigenschaft ist von großem Vorteil, da bei großen Flächen die Beschichtung mitunter nicht in einem Zuge aufgebracht werden kann, sondern über mehrere Tage verteilt aufgebracht werden muss.

In nächsten Arbeitsschritt des erfindungsgemäßen Verfahrens werden die vorbehandelten Bitumenbahnen nach dem Aushärten der erfindungsgemäßen Beschichtungszusammensetzungen als Grundierung mit an sich bekannten Flüssigkunststoffen für die Bauwerksabdichtung beschichtet. Hierbei handelt es sich um reaktive Flüssigkunststoffe des Standes der Technik typischerweise solchen auf Basis von ungesättigten Polyestern, Polyurethanen, silanmodifizierten Polyurethanen oder Acrylatcopolymeren, wie sie in der EOTA-Leitlinie ETAG Nr. 005 (Leitlinie für die europäische Technische Zulassung für flüssig aufzubringende Dachabdichtungen) genauer spezifiziert sind. Derartige Abdichtungssysteme werden typischerweise in Kombination mit einem textilen Flächengebilde appliziert. Mit diesem Begriff sind alle gewirkten, gestrickten, gewebten, geflochtenen, gehäkelten oder auf sonstige Art aus Garnen oder Fasern hergestellten Flächengebilde gemeint. Geeignete textile Flächengewebe basieren auf organischen oder anorganischen Fasern, wie beispielsweise Glasfasern, Kohlefasern oder Kunststofffasern, wie beispielsweise Polyester-, Polyamid-, Aramid- oder Polyacrylatfasern, Metallfasern oder Fasern mit metallischen Bestandteilen o. dgl.. Vorzugsweise werden Vliesmaterialien eingesetzt wie beispielsweise Glasfaservliese oder Polyestervliese. Vorzugsweise werden die Flächengebilde, insbesondere in Form von Polyestervliesen, mit einem Flächengewicht von 50 bis 300 g/m² oder 75 bis 250 g/m², besonders bevorzugt 110 bis 165 g/m² im erfindungsgemäßen Verfahren eingesetzt. Die Applikation erfolgt zumeist so, dass ca. 2-10 kg, bevorzugt 2-5 kg, besonders bevorzugt 2,5kg bis 3,5kg Flüssigkunststoff pro Quadratmeter zu beschichtender Fläche appliziert werden. Die Applikation erfolgt zumeist derart, dass in Kombination mit dem textilen Flächengebilde eine Beschichtungsdicke von mindestens 2 mm, typischerweise von 2 bis 5 mm oder vorzugsweise 2,2 mm bis 3,5 mm resultiert (bezogen auf die Gesamtschichtdicke).

Bevorzugt werden im erfindungsgemäßen Verfahren feuchtigkeitshärtende, einkomponentige Flüssigkunststoffe auf Basis von Polyurethanen und silanterminierten Polymeren eingesetzt. Feuchtigkeitshärtende, einkomponentige Flüssigkunststoffe auf Basis von Polyurethanen sind handelsüblich und basieren auf Polyisocyanat-Prepolymeren, ggf. in Kombination mit latenten Härtern wie Oxazolanen, Aldiminen und/oder Ketiminen.

Besonders bevorzugt im erfindungsgemäßen Verfahren einsetzbare feuchtigkeitshärtende, einkomponentige Flüssigkunststoffe basieren auf silanterminierten Polymeren. Derartige Flüssigkunststoffe werden beispielhaft beschrieben in der WO 2019 114990 A1 und im dort zitierten Stand der Technik. Im Rahmen der vorliegenden Erfindung hat sich gezeigt, dass Flüssigkunststoffe auf Basis von silanterminierten Polymeren eine besonders gute Haftung und Verträglichkeit mit den erfindungsgemäßen Beschichtungszusammensetzungen zeigen. Dadurch wird eine besonders rationelle Verarbeitungsweise möglich, bei der der Flüssigkunststoff unmittelbar nach dem oberflächlichen Antrocknen der erfindungsgemäßen Beschichtungszusammensetzung als Grundierung aufgebracht werden kann.

Im erfindungsgemäßen Verfahren beschichtete Bitumenbahnen mit einer Grundierungs- und einer Abdichtungsschicht weisen eine wesentlich verbesserte Bewitterungsstabilität auf im Vergleich zu Bitumenbahnen, die nur mit der identischen Abdichtungsschicht versehen sind. Damit ist das erfindungsgemäße Verfahren insbesondere für Anschlussbereiche relevant, in denen Bitumenbahnen dauerhaft, d.h. für einen Zeitraum von mehr als 20 Jahren und kraftschlüssig mit anderen Dachmaterialien wie insbesondere Mauerwerk, Metallen oder Kunststoffen verbunden werden sollen.

Die nachfolgenden Beispiele sollen das Wesen der Erfindung näher erläutern.

### Beispiel 1: Herstellung einer erfindungsgemäßen Beschichtungszusammensetzung

65 g Silres IC678 (Methoxyfunktionelles Phenylsilikonharz mit einem mittleren Molekulargewicht von 900, Handelsprodukt der Wacker Chemie AG, München) und 35g Geniosil STPE10 (Umsetzungsprodukt eines linearen Polypropylenoxidpolyethers mit Isocyanatomethyl-dimethoxymethylsilan, Handelsprodukt der Wacker Chemie AG, München) werden mit 1g 3-Aminopropyltrimethoxysilan, 0,5 g 1,1,3,3-Tetramethylguanidin und 2g Xylol von Hand vermischt. Es entsteht eine klare Primerlösung mit einer Viskosität von 90 mPas bei 23°C

### Beispiel 2: Herstellung einer erfindungsgemäßen Beschichtungszusammensetzung

70g Silres IC678 , 20g Geniosil STPE 10 und 10g Geniosil STPE15 (Umsetzungsprodukt eines linearen Polypropylenoxidpolyethers mit 3-Isocyanatopropyl-trimethoxymethylsilan, Handelsprodukt der Wacker Chemie AG, München) werden mit 2g N-Aminoethyl-3-aminopropyltrimethoxysilan, 1g Diazabicycloundecen (DBU) und 1g Dipropylenglykoldimethylether von Hand vermischt. Es entsteht eine klare Primerlösung mit einer Viskosität von 90 mPas bei 23°C.

### Beispiel 3: Herstellung einer erfindungsgemäßen Beschichtungszusammensetzung

70g Silres IC368 (Methoxyfunktionelles Methyl-phenylsilikonharz mit einem mittleren Molekulargewicht von 1900, Handelsprodukt der Wacker Chemie AG, München) und 30g Geniosil STPE 10 werden mit 2g N-Aminoethyl-3-aminopropyltrimethoxysilan, 1g Diazabicycloundecen (DBU) und 1g Dipropylenglykoldimethylether von Hand vermischt. Es entsteht eine klare Primerlösung mit einer Viskosität von 130 mPas bei 23°C.

### Beispiel 4: Herstellung einer erfindungsgemäßen Beschichtungszusammensetzung

72g Silres IC368, 18g Geniosil STPE10 und 10 Geniosil STPE15 werden mit 1g 3-Aminopropyl-trimethoxysilan und 0,7 g 1,1,3,3-Tetramethylguanidin von Hand vermischt. Es entsteht eine klare Primerlösung mit einer Viskosität von 130 mPas bei 23°C

### Anwendungstechnische Tests:

Prüfmuster der Größe 5cm*10cm einer handelsüblichen Polymerbitumen-Schweißbahn (Bauder Karat der Fa. Paul Bauder GmbH, Stuttgart) werden mit den Beschichtungszusammensetzungen der Beispiele 1 bis 4 als Grundierung per Pinselauftrag gleichmäßig beschichtet, wobei die Auftragsmenge jeweils einer Menge von 200g/m² entspricht. Die beschichteten Prüfmuster sind nach einer Zeit von 4h grifftrocken und werden dann im nächsten Arbeitsschritt mit den nachstehend benannten handelsüblichen Flüssigkunststoffen in Kombination mit einem verstärkenden Polyester-Vlies (Frankolon Polyestervlies 110g/m² der Fa. Franken-Systems GmbH, Gollhofen) überarbeitet, wobei die Auftragsmenge jeweils 3,5 kg/m² entspricht.

### Handelsübliche Flüssigkunststoffe:

Silanterminiertes 1K-Polyurethan: Frankosil 1K Plus der Fa. Franken-Systems GmbH, Gollhofen
Silanterminiertes 1K-Polyurethan: Bauder Liquitec PU Detail der Fa. Paul Bauder GmbH, Stuttgart
Isocyanatfunktionelles 1K-Polyurethan: Enkopur der Fa. Johannes Enke GmbH & Co KG, Düsseldorf
Silanterminiertes 1K-Polyurethan: Triflex SmartTec der Fa. Triflex GmbH &Co KG, Minden

In den nicht erfindungsgemäßen Vergleichsversuchen wurden die o.g. handelsüblichen Flüssigkunststoffe direkt, d.h. ohne Aufbringen einer Grundierung, auf die o.g. Polymerbitumen-Schweißbahn in Kombination mit dem Polyestervlies wie oben beschrieben unter Berücksichtigung der Herstellerangaben appliziert.

Nach einer Trocknungszeit von 7 Tagen bei Umgebungstemperatur werden alle Prüfmuster einer Trockenbewitterung mit hoher UV-Strahlung in einem handelsüblichen Kurzbewitterungsgerät mit folgenden Prüfbedingungen unterzogen:
Q-Sun Xenon Test Chamber, Model Xe-1-S der Firma Q-Lab
Extended UV - Q/B Filter und TUV Sensor
Bestrahlungsleistung 60W/m² bei maximaler UV-Intensität (Einstellung TUV)
Kammertemperatur 85°C
Bestrahlungsdauer 20 Tage

### Frankosil 1K PLUS

| ohne Grundierung | Verfärbung nach 60 Stunden | Rissbildung nach 7 Tagen |
|---|---|---|
| mit Grundierung aus Bsp.1 | beginnende Verfärbung nach 7 Tagen | keine Rissbildung nach 20 Tagen |
| mit Grundierung aus Bsp.2 | beginnende Verfärbung nach 7 Tagen | keine Rissbildung nach 20 Tagen |
| mit Grundierung aus Bsp.3 | beginnende Verfärbung nach 4 Tagen | minimale Rissbildung nach 20 Tagen |
| mit Grundierung aus Bsp.4 | beginnende Verfärbung nach 4 Tagen | minimale Rissbildung nach 20 Tagen |

### Bauder Liquitec PU Detail

| | | |
|---|---|---|
| ohne Grundierung | Verfärbung nach 4 Tagen | Rissbildung nach 7 Tagen |
| mit Grundierung aus Bsp.1 | beginnende Verfärbung nach 12 Tagen | keine Rissbildung nach 20 Tagen |
| mit Grundierung aus Bsp.2 | beginnende Verfärbung nach 12 Tagen | keine Rissbildung nach 20 Tagen |
| mit Grundierung aus Bsp.3 | beginnende Verfärbung nach 12 Tagen | minimale Rissbildung nach 20 Tagen |
| mit Grundierung aus Bsp.4 | beginnende Verfärbung nach 12 Tagen | minimale Rissbildung nach 20 Tagen |

### Enkopur

| | | |
|---|---|---|
| ohne Grundierung | Verfärbung nach 5 Tagen | Rissbildung nach 9 Tagen |
| mit Grundierung aus Bsp.1 | beginnende Verfärbung nach 14 Tagen | keine Rissbildung nach 20 Tagen |
| mit Grundierung aus Bsp.2 | beginnende Verfärbung nach 14 Tagen | keine Rissbildung nach 20 Tagen |
| mit Grundierung aus Bsp.3 | beginnende Verfärbung nach 10 Tagen | keine Rissbildung nach 20 Tagen |
| mit Grundierung aus Bsp.4 | beginnende Verfärbung nach 10 Tagen | keine Rissbildung nach 20 Tagen |

### Frankosil 1K PLUS

| | | |
|---|---|---|
| ohne Grundierung | Verfärbung nach 60 Stunden | Rissbildung nach 7 Tagen |
| mit Grundierung aus Bsp.1 | beginnende Verfärbung nach 7 Tagen | keine Rissbildung nach 20 Tagen |
| mit Grundierung aus Bsp.2 | beginnende Verfärbung nach 7 Tagen | keine Rissbildung nach 20 Tagen |
| mit Grundierung aus Bsp.3 | beginnende Verfärbung nach 4 Tagen | minimale Rissbildung nach 20 Tagen |
| mit Grundierung aus Bsp.4 | beginnende Verfärbung nach 4 Tagen | minimale Rissbildung nach 20 Tagen |

### Triflex SmartTec

| | | |
|---|---|---|
| ohne Grundierung | Verfärbung nach 48 Stunden | Rissbildung nach 3 Tagen |
| mit Grundierung aus Bsp.1 | beginnende Verfärbung nach 3 Tagen | erste Rissbildung nach 7 Tagen |
| mit Grundierung aus Bsp.2 | beginnende Verfärbung nach 7 Tagen | erste Rissbildung nach 7 Tagen |
| mit Grundierung aus Bsp.3 | beginnende Verfärbung nach 4 Tagen | erste Rissbildung nach 5 Tagen |
| mit Grundierung aus Bsp.4 | beginnende Verfärbung nach 4 Tagen | erste Rissbildung nach 5 Tagen |

## Patentansprüche

1. Verwendung einer Beschichtungszusammensetzung zur Grundierung von Abdichtungsbahnen auf Bitumenbasis mindestens enthaltend
A) eine polymere Verbindung der Formel
Y- [O-C=O-NH-(CH₂)ₙ-Si-R¹ₐ-R²₍₃₋ₐ₎] x
wobei Y für einen x-wertigen Polymerrest steht, wie er durch Entfernung der OH-Gruppen aus einem Polyetherpolyol entsteht und R¹ für eine Methylgruppe steht und R² für eine Methoxy- oder Ethoxygruppe steht, n=1 oder 3 ist und a=0 oder 1 ist
B) Silikonharze der allgemeinen Strukturformel
R³_{c}(R⁴O)_{d}R⁵ₑSiO_{(4-c-d-e)/2}
worin R³ und R⁴ für Alkylreste mit 1 bis 8 Kohlenstoffatomen stehen, R⁵ für einen Phenylrest steht und c, d und e stehen jeweils für 0, 1, 2, oder 3, e steht für 0, 1 oder 2 wobei c+d+e kleiner oder gleich 3 ist und bevorzugt c+e = 0 oder 1 ist, besonders bevorzugt ist e=1.
C) einen flüssigen Katalysator zur Beschleunigung der Silanpolykondensation ausgewählt aus der Gruppe der organischen Zinnverbindungen, der organischen Titanverbindungen, der Amine, der Amidine und/oder der Guanidine
D) gegebenenfalls Verbindungen, die mindestens eine primäre, sekundäre oder tertiäre Aminogruppe und mindestens eine Alkoxysilylgruppe aufweisen
E) sowie gegebenenfalls Hilfs- und Zusatzstoffe.

2. Verwendung einer Beschichtungszusammensetzung gemäß Anspruch 1, ferner enthaltend Verbindungen, die mindestens eine primäre, sekundäre oder tertiäre Aminogruppe und mindestens eine Alkoxysilylgruppe aufweisen.

3. Verwendung von Beschichtungszusammensetzung gemäß Anspruch 1 oder 2 zur Grundierung von beschieferten oder besandeten Dachbahnen auf Bitumenbasis.

4. Verfahren zur Abdichtung von Anschlüssen auf Dächern mithilfe beschieferter oder besandeter Dachbahnen auf Bitumenbasis, **dadurch gekennzeichnet, dass** die Bitumenbahnen zunächst mit einer Grundierung gemäß einem der Ansprüche 1 bis 3 vorbehandelt werden und anschließend mit einer Abdichtungsmasse auf Basis von flüssigen Polymeren beschichtet werden.

5. Verfahren zur Abdichtung von Anschlüssen auf Dächern gemäß Anspruch 4, **dadurch gekennzeichnet, dass** flüssige Abdichtungsmassen auf Basis von feuchtigkeitshärtenden Polymeren eingesetzt werden.

6. Verfahren zur Abdichtung von Anschlüssen auf Dächern gemäß Anspruch 4, **dadurch gekennzeichnet, dass** flüssige Abdichtungsmassen auf Basis von feuchtigkeitshärtenden Polymeren eingesetzt werden, die durch Silanpolykondensation vernetzen.

7. Verfahren zur Abdichtung von Anschlüssen auf Dächern gemäß Anspruch 5 oder 6, **dadurch gekennzeichnet, dass** die feuchtigkeitshärtenden Abdichtungsmassen in Kombination mit einem verstärkenden Gewebe appliziert werden.

8. Grundierte Abdichtungsbahn, die entsprechend der Verwendung einer Beschichtungszusammensetzung gemäß einem der Ansprüche 1 bis 3 vorbehandelt wurde.

## Claims

1. Use of a coating composition for priming bitumen-based sealing sheets, containing at least
A) a polymer compound of the formula
Y-[O-C=O-NH-(CH₂)ₙ-Si-R¹ₐ-R²₍₃₋ₐ₎]ₓ
where Y represents an x-valent polymer residue as obtained by removing the OH groups from a polyether polyol, R¹ represents a methyl group and R² represents a methoxy or ethoxy group, n = 1 or 3 and a = 0 or 1 ,
B) silicone resins of the general structural formula
R³_{c}(R⁴O)_{d}R⁵ₑSiO_{(4-c-d-e)/2}
where R³ and R⁴ represent alkyl residues with 1 to 8 carbon atoms, R⁵ represents a phenyl residue, and c, d, and e each represent 0, 1, 2, or 3, e represents 0, 1, or 2, where c+d+e is less than or equal to 3 and preferably c+e = 0 or 1, particularly preferably e = 1,
C) a liquid catalyst for accelerating the silane polycondensation selected from the group consisting of organic tin compounds, organic titanium compounds, amines, amidines and/or guanidines,
D) optionally compounds which have at least one primary, secondary or tertiary amino group and at least one alkoxysilyl group,
E) and optionally auxiliaries and additives.

2. Use of a coating composition according to claim 1, further comprising compounds having at least one primary, secondary or tertiary amino group and at least one alkoxysilyl group.

3. Use of a coating composition according to claim 1 or 2 for priming bitumen-based roofing sheets that have been slated or sanded.

4. Method for sealing fittings on roofs using bitumen-based roofing sheets that have been slated or sanded, **characterized in that** the bitumen sheets are first pretreated with a primer according to one of claims 1 to 3 and then coated with a sealing compound based on liquid polymers.

5. Method for sealing fittings on roofs according to claim 4, **characterized in that** liquid sealing compounds based on moisture-curing polymers are employed.

6. Method for sealing fittings on roofs according to claim 4, **characterized in that** liquid sealing compounds based on moisture-curing polymers are employed, which cross-link by silane polycondensation.

7. Method for sealing fittings on roofs according to claim 5 or 6, **characterized in that** the moisture-curing sealing compounds are applied in combination with a reinforcing fabric.

8. Primed sealing sheet which has been pretreated in accordance with the use of a coating composition according to one of claims 1 to 3.

## Revendications

1. Utilisation d'une composition de revêtement pour l'apprêtage de feuilles d'étanchéité à base de bitume, contenant au moins
A) un composé polymère de formule
Y-[O-C=O-NH-(CH₂)n-Si-R¹ₐ-R²₍₃₋ₐ₎]ₓ
dans laquelle Y représente un radical polymère x-valent obtenu par élimination des groupes OH d'un polyéther polyol, R¹ représente un groupe méthyle et R² représente un groupe méthoxy ou éthoxy, n = 1 ou 3 et a = 0 ou 1,
B) des résines de silicone de formule structurale générale
R³_{c}(R⁴O)_{d}R⁵ₑSiO_{(4-c-d-e)/2}
où R³ et R⁴ représentent des résidus alkyle ayant 1 à 8 atomes de carbone, R⁵ représente un résidu phényle, et c, d et e représentent chacun 0, 1, 2 ou 3, e représente 0, 1 ou 2, où c+d+e est inférieur ou égal à 3 et de préférence c+e = 0 ou 1, particulièrement préfère e = 1,
C) un catalyseur liquide pour accélérer la polycondensation du silane choisi dans le groupe constitué par les composés organiques de l'étain, les composés organiques du titane, les amines, les amidines et/ou les guanidines,
D) éventuellement des composés qui ont au moins un groupe amino primaire, secondaire ou tertiaire et au moins un groupe alcoxysilyle,
E) et éventuellement des adjuvants et des additifs.

2. Utilisation d'une composition de revêtement selon la revendication 1, comprenant en outre des composés ayant au moins un groupe amino primaire, secondaire ou tertiaire et au moins un groupe alcoxysilyle.

3. Utilisation d'une composition de revêtement selon les revendications 1 ou 2 pour l'apprêtage de feuilles de toiture à base de bitume qui ont été ardoisées ou sablées.

4. Procédé pour étanchéifier des raccords sur des toitures à l'aide de feuilles de toiture à base de bitume qui ont été ardoisées ou sablées, **caractérisé en ce que** les feuilles de bitume sont d'abord prétraitées avec un apprêt selon l'une des revendications 1 à 3, puis revêtues d'un composé d'étanchéité à base de polymères liquides.

5. Procédé pour étanchéifier des raccords sur des toitures selon la revendication 4, **caractérisé en ce que** l'on utilise des composés d'étanchéité liquides à base de polymères durcissant à l'humidité.

6. Procédé pour étanchéifier des raccords sur des toitures selon la revendication 4, **caractérisé en ce que** l'on utilise des composés d'étanchéité liquides à base de polymères durcissant à l'humidité, qui se réticulent par polycondensation de silane.

7. Procédé pour étanchéifier des raccords sur des toitures selon la revendication 5 ou 6, **caractérisé en ce que** les composés d'étanchéité durcissant à l'humidité sont appliqués en combinaison avec un tissu de renfort.

8. Feuille d'étanchéité apprêtée qui a été prétraitée conformément à l'utilisation d'une composition de revêtement selon l'une des revendications 1 à 3.
